# EUROPÄISCHE PATENTSCHRIFT

(11) **EP 2 858 857 B1**
(45) Veröffentlichungstag und Bekanntmachung des Hinweises auf die Patenterteilung: **12.10.2016**
(21) Anmeldenummer: 13723096.7
(22) Anmeldetag: 14.05.2013
(51) Int. Cl.: B60R 21/017, G05F 5/00

(54) **INTEGRIERTER REGLER, INSBESONDERE SPANNUNGSREGLER, UND STEUERGERÄT FÜR PERSONENSCHUTZMITTEL**
INTEGRATED REGULATOR, IN PARTICULAR VOLTAGE REGULATOR, AND CONTROLLER FOR PASSENGER PROTECTION MEANS
RÉGULATEUR INTÉGRÉ, NOTAMMENT RÉGULATEUR DE TENSION, ET APPAREIL DE COMMANDE POUR DES MOYENS DE PROTECTION DES PERSONNES

(30) Priorität: 06.06.2012 DE 102012209582
(43) Veröffentlichungstag der Anmeldung: 15.04.2015
(73) Patentinhaber: Robert Bosch GmbH, 70442 Stuttgart (DE)
(72) Erfinder: SIEVERS, Falko, 72762 Reutlingen (DE); SCHUMACHER, Hartmut, 71691 Freiberg (DE); LIST, Carsten, 74399 Walheim (DE)
(86) Internationale Anmeldenummer: PCT/EP2013/059874
(87) Internationale Veröffentlichungsnummer: WO 2013/182386

(56) Entgegenhaltungen:
- DE-A1-102009 047 480
- DE-A1-102010 043 100
- William Lepkowski: "Using the Enable Pin in a Linear Regulator as a Voltage Supervisor", AND8239/D Application Note, 30. März 2009 (2009-03-30), XP055072002, Gefunden im Internet: URL:http://www.onsemi.com/pub_link/Collate ral/AND8239-D.PDF [gefunden am 2013-07-18]

## Beschreibung

### Stand der Technik

Die Erfindung geht aus von einem integrierten Regler, insbesondere Spannungsregler für Personenschutzmittel in einem Fahrzeug nach der Gattung des unabhängigen Patentanspruchs 1 und von einem Steuergerät zur Ansteuerung von Personenschutzmitteln in einem Fahrzeug nach der Gattung des unabhängigen Patentanspruchs 9.

Aus dem Stand der Technik bekannte Steuergerät zur Ansteuerung von Personenschutzmitteln in einem Fahrzeug zeichnen sich unter anderem dadurch aus, dass alle Versorgungsspannungen, welche für den Betrieb des Personenschutzsystems erforderlich sind, innerhalb des Personenschutzsystems selbst erzeugt werden. Dadurch kann sichergestellt werden, dass korrekte Funktionalität unabhängig von Schwankungen der Batteriespannung im Fahrzeug gegeben ist. Die verwendeten Spannungsregler können beispielsweise als Linearregler und/oder DC/DC-Schaltwandler ausgeführt werden und können fest vorgegebene Ausgangsspannungen, wie z.B. 6.7V, 5.0V, 3.3V, zur direkten Versorgung von anderen Systembausteinen, wie beispielsweise Mikrocontrollern, Sensoren, Kommunikationsschnittstellen, Lampentreibern usw. zur Verfügung stellen.

Die Ausgangsspannungen der Kleinspannungsregler (5.0V und 3.3) können dabei von einem System-ASIC (ASIC: Anwendungsspezifische Integrierte Schaltung) selbst überwacht werden, wobei aus der Überwachung der Ausgabespannungen eine Freigabe bzw. Auslösung eines Resetsignals abgeleitet werden kann. Das Resetsignal kann wiederum genutzt werden, um das Personenschutzsystem freizugeben bzw. zu aktivieren oder zurückzusetzen, d.h. in einen sicheren Zustand zu versetzen, in welchem das Personenschutzsystem keine Funktionalität zur Verfügung stellt. Um also die volle Funktionalität des Personenschutzsystems bereitzustellen, müssen die überwachten Spannungen zur Verfügung stehen und sich im erlaubten Bereich befinden. In aktuellen Personenschutzsystemen gibt es jedoch keine Möglichkeit, die Spannungsregler zu deaktivieren bzw. die Überwachung der Ausgabesignale der Spannungsregler außer Kraft zu setzen. Somit ist es immer erforderlich, dass alle Spannungsregler mit korrekten externen Bauteilen beschalten sind, so dass die Regelspannungen stabil sind und deren Überwachung robust funktioniert. Dies ist auch erforderlich, wenn die Ausgangsspannung eines Reglers, wie z.B. 5.0V, in dem spezifischen Personenschutzsystem aufgrund von Kundenanforderungen gar nicht verwendet wird. Auch bei Personenschutzsystemen, in welchen mehrere System-ASICs kombiniert werden, ist es möglich, dass nicht alle Spannungsregler erforderlich sind; dennoch müssen alle vorhandenen Spannungsregler korrekt beschaltet werden, um zu verhindern, dass das Personenschutzsystem nicht im Resetzustand verharrt. Vergleichbare frei verfügbare System-ASICs für Personenschutzsysteme bieten ebenso keine Möglichkeit einzelne integrierte Regler zu deaktivieren, sofern diese überwacht und zur Erzeugung des Resetsignals verwendet werden.

Aus "Using the Enable Pin in a Linear Regulator as a Voltage Supervisor von William Lepkowski ist ein integrierter Regler (NCP500) bekannt, welcher auch geeignet als Spannungsregler für Personenschutzmittel in einem Fahrzeug ist, mit einem Regelelement (Fig. 4, p-chanel MOSFET), welches ein Eingangssignal in ein Ausgangssignal mit einem vorgegebenen Wert wandelt, und einer Ansteuerschaltung (Fig. 4, Driver with current limit), welche das Regelelement (MOSFET) ansteuert, um das Ausgangssignal mit dem vorgegebenen Wert zu erzeugen, wobei eine Konfiguarionsschaltung ("Enable Circuit", Fig. 4) mindestens ein Konfigurationssignal ("enable pin") empfängt und auswertet und in Abhängigkeit von der Auswertung das Regelelement (MOSFET) deaktiviert (Fig. 6, 67; S. 2, rechte Sp: "The enable pin can be used to shutdown the output voltage ...").

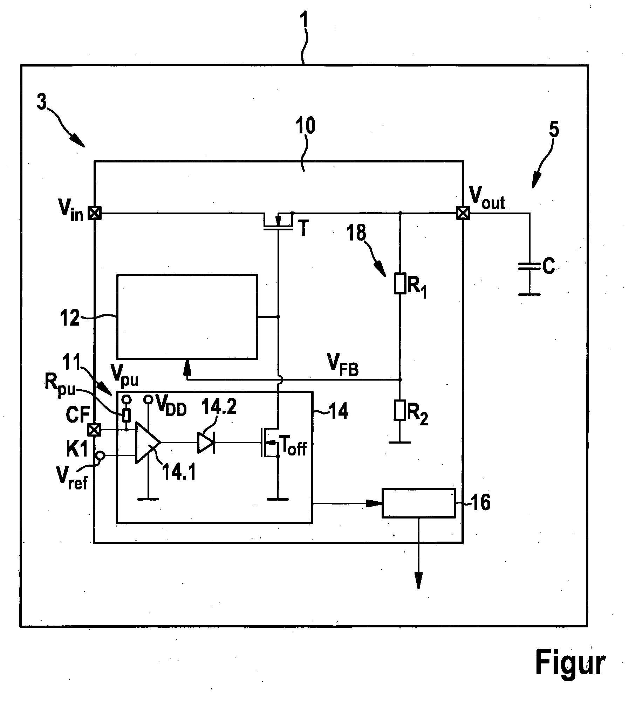

In der Offenlegungsschrift DE 10 2009 047 480 A1 werden beispielsweise ein Steuergerät und ein Verfahren zur Ansteuerung von Personenschutzmitteln für ein Fahrzeug beschrieben. Das beschriebene Steuergerät umfasst einen Versorgungsbaustein, welcher eine Eingangsspannung für die Ansteuerung der Personenschutzmittel wandelt. Zwischen einer Fahrzeugversorgungsspannung und der Eingangsspannung des Versorgungsbausteins ist ein Spannungsregler geschaltet, welcher die Eingangsspannung auf einen vorgegebenen ersten Wert begrenzt. Dem Spannungsregler ist eine Abschaltschaltung vorgeschaltet, welche den Spannungsregler in Abhängigkeit von der Fahrzeugversorgungsspannung abschaltet, wobei die Abschaltspannung die Fahrzeugversorgungsspannung gegen einen zweiten Wert prüft und bei Überschreiten dieses zweiten Werts den Spannungsregler abschaltet.

### Offenbarung der Erfindung

Der erfindungsgemäße integrierte Regler für Personenschutzmittel in einem Fahrzeug mit den Merkmalen des unabhängigen Patentanspruchs 1 und ein korrespondierendes Steuergerät zur Ansteuerung von Personenschutzmittel mit einem solchen integrierten Regler mit den Merkmalen des unabhängigen Patentanspruchs 9 haben demgegenüber den Vorteil, dass einzelne integrierte Regler eines Personenschutzsystems, vorzugsweise Spannungsregler, deaktiviert werden können. Dadurch kann in vorteilhafter Weise auch die entsprechende Überwachung des korrespondierenden Ausgabesignals und der Einfluss auf der Ausgabesignalüberwachung auf die Erzeugung eines Resetsignals für das Personenschutzsystem abgeschaltet werden. Außerdem muss ein abgeschalteter bzw. deaktivierter integrierter Regler nicht mit externen Bauteilen beschaltet werden, so dass die Bauteilkosten reduziert werden können. Die Abschaltung bzw. Deaktivierung des erfindungsgemäßen integrierten Reglers erfolgt beispielsweise über einen separaten Konfigurationspin, welcher entsprechend angesteuert wird. Zudem kann eine am Konfigurationspin erkannte Konfiguration gespeichert und über einen Auslesebefehl per Software ausgelesen und verifiziert werden.

Der Kern der Erfindung besteht darin, einzelne integrierte Regler in einem System-ASIC eines Personenschutzsystems für den Fall deaktivieren bzw. abschalten zu können, dass deren Regelsignal im Gesamtsystem entweder gar nicht benötigt oder durch einen anderen integrierten Regler bereitgestellt wird. Der deaktivierte bzw. abgeschaltete Regler muss dann nicht mehr mit externen Bauteilen, wie z.B. Regelkapazitäten, Induktivitäten, ohmschen Widerständen oder Dioden beschalten werden. Somit können unnötige Kosten vermieden werden. Außerdem steigt die Robustheit des Personenschutzsystems, da der abgeschaltete integrierte Regler keine unzulässigen Signale erzeugen kann. Dies wäre der Fall, wenn man den integrierten Regler aktiviert ließe und lediglich die Reglerkapazitäten oder andere externe Bauteile reduzieren oder entfernen würde, da dann eine stark schwankende Ausgangsspannung (Schwingen) entstehen könnte, welche andere Schaltungsteile des Personenschutzsystems beeinflussen könnte. Dies kann beispielsweise zur Überkopplung innerhalb des System-ASICs und zur Erzeugung des Resetsignals führen, da die integrierten Regler zur Erzeugung des Resetsignals überwacht sind. Ein weiterer Vorteil besteht darin, dass die aktuelle Konfiguration des erfindungsgemäßen integrierten Reglers über eine Softwareabfrage verifiziert werden kann und somit fehlerhaft aktivierte bzw. deaktivierte integrierte Regler erkannt werden können, so dass eine eindeutige Fehlerzuordnung möglich ist.

Ausführungsformen der vorliegenden Erfindung stellen einen integrierten Regler, insbesondere einen Spannungsregler für Personenschutzmittel in einem Fahrzeug, zur Verfügung, welcher ein Regelelement, welches ein Eingangssignal in ein Ausgangssignal mit einem vorgegebenen Wert wandelt, und eine Ansteuerschaltung umfasst, welche das Regelelement ansteuert, um das Ausgangssignal mit dem vorgegebenen Wert zur erzeugen. Erfindungsgemäß ist eine Konfigurationsschaltung vorgesehen, welche mindestens ein Konfigurationssignal empfängt und auswertet und in Abhängigkeit von der Auswertung das Regelelement deaktiviert.

Des Weiteren wird ein Steuergerät zur Ansteuerung von Personenschutzmitteln in einem Fahrzeug mit einer Regleranordnung vorgeschlagen, welche mindestens eine Spannung im Steuergerät regelt. Erfindungsgemäß weist die Regleranordnung mindestens einen erfindungsgemäßen integrierten Regler auf.

Durch die in den abhängigen Ansprüchen aufgeführten Maßnahmen und Weiterbildungen sind vorteilhafte Verbesserungen des im unabhängigen Patentanspruch 1 angegebenen integrierten Reglers für Personenschutzmittel in einem Fahrzeug möglich.

Besonders vorteilhaft ist, dass das mindestens eine Konfigurationssignal mittels einer Pin-Konfiguration erzeugbar ist. Zur Erzeugung eines ersten logischen Signalpegels für das mindestens eine Konfigurationssignal ist ein korrespondierender Anschlusspin fest mit Masse verbunden. Zur Erzeugung eines zweiten logischen Signalpegels für das mindestens eine Konfigurationssignal ist ein korrespondierender Anschlusspin offen gelassen. Zudem kann eine innerhalb oder außerhalb des integrierten Reglers angeordnete Pullup-Schaltung einen offengelassenen Anschlusspin auf den zweiten logischen Signalpegel bringen. Eine solche Pullup-Schaltung umfasst vorzugsweise einen ohmschen Widerstand, welcher mit einem vorgegebenen Spannungspotential verbunden ist, welches vorzugsweise den zweiten logischen Signalpegel repräsentiert. Die Erzeugung des mindestens einen Konfigurationssignals über die Pin-Konfiguration ermöglicht in vorteilhafter Weise eine einfache und kostengünstige Implementierung des erfindungsgemäßen integrierten Reglers. Sind mehrere Regler im Steuergerät integriert, dann kann für jeden Regler ein separater Konfigurationspin vorgesehen werden, um den korrespondierenden integrierten Regler zu deaktivieren.

In vorteilhafter Ausgestaltung des erfindungsgemäßen integrierten Reglers kann die Konfigurationsschaltung zur Bewertung des mindestens einen Konfigurationssignals einen Komparator umfassen, welcher das mindestens eine Konfigurationssignal mit einer Referenzspannung vergleicht. In Abhängigkeit des Vergleichs kann der Komparator ein Schaltelement, vorzugsweise einen Schalttransistor, ansteuern, um das Regelelement zu deaktivieren bzw. abzuschalten.

In weiterer vorteilhafter Ausgestaltung des erfindungsgemäßen integrierten Reglers kann die Konfigurationsschaltung die Auswertung des mindestens einen Konfigurationssignals während einer Systeminitialisierung durchführen. Dadurch steht das korrekte Ausgangssignal schon wesentlich früher als bei einer Software-Programmierung zur Verfügung. Zur Verbesserung der Fehlerdiagnose kann die Konfigurationsschaltung die erkannte Konfiguration (Regelelement deaktivieren bzw. abschalten oder Regelelement aktiviert bzw. arbeitsfähig lassen) verriegeln und in einem Statusspeicher ablegen. Durch die Verriegelung der erkannten Konfiguration kann in vorteilhafter Weise verhindert werden, dass während des Betriebs durch auftretende Fehler eine Änderung der Konfiguration bewirkt werden kann, beispielsweise durch einen EMV-Einfluss.

In weiterer vorteilhafter Ausgestaltung des erfindungsgemäßen integrierten Reglers kann die Ansteuerschaltung das Regelelement in Abhängigkeit von einem Rückkopplungssignal ansteuern, um das Ausgangssignal mit dem vorgegebenen Wert zur erzeugen. Das Rückkopplungssignal kann vorzugsweise von mindestens einem integrierten Spannungsteiler mit einem vorgegebenen Teilerverhältnis aus dem Ausgangssignal erzeugt werden.

Ein Ausführungsbeispiel der Erfindung ist in der Zeichnung dargestellt und wird in der nachfolgenden Beschreibung näher erläutert. In der Zeichnung bezeichnen gleiche Bezugszeichen Komponenten bzw. Elemente, die gleiche bzw. analoge Funktionen ausführen.

### Kurze Beschreibung der Zeichnungen

Die einzige Figur zeigt ein schematisches Blockschaltbild eines Ausschnitts eines Steuergeräts für Personenschutzmittel mit einem Ausführungsbeispiel eines erfindungsgemäßen integrierten Reglers.

Aus dem Stand der Technik bekannte integrierte Spannungsregler bieten die Möglichkeit, verschiedene fest vorgegebene Ausgangsspannungen zu erzeugen. So gibt es von vielen Spannungsreglern unterschiedliche Ausführungsvarianten, welche sich lediglich in der zu regelnden Ausgangsspannung unterscheiden, wobei jedoch für jeden Spannungswert ein separater Regler zu verwenden ist. Ebenso gibt es Spannungsregler, deren Ausgangsspannung durch Anpassung eines externen Spannungsteilers variabel eingestellt werden kann. Es wird dabei auf eine fest vorgegebene Rückkopplungsspannung ("Feedback"-Spannung) von beispielsweise 1.2V geregelt, welche über einen externen Spannungsteiler mit mindestens zwei Widerständen aus einer Ausgangsspannung des Reglers heruntergeteilt wird. Durch Variation dieses Spannungsteilers kann die Ausgangsspannung des Reglers eingestellt werden, welche immer größer als die Rückkopplungsspannung ist. Die bestehenden variablen Schaltungen sind dabei meist stark fehleranfällig. Ein Einzelfehler an einem der externen Spannungsteilerwiderstände kann direkt zu einer falschen und gegebenenfalls schädlichen Ausgangsspannung führen. Eine Fehlererkennung ist meist nur schwer möglich, da der Regler selbst nicht zwischen einem fehlerhaft zu großen bzw. kleinen Widerstandwert und einem bewusst gewählten zu großen bzw. kleinen Widerstandswert unterscheiden kann.

### Ausführungsformen der Erfindung

Wie aus der einzigen Figur ersichtlich ist, umfasst das dargestellte Ausführungsbeispiel eines erfindungsgemäßen integrierten Reglers 10, welcher im dargestellten Ausführungsbeispiel als Spannungsregler für Personenschutzmittel in einem Fahrzeug ausgeführt ist, ein Regelelement T, welches ein Eingangssignal Vᵢₙ in ein Ausgangssignal Vₒᵤₜ mit einem vorgegebenen Wert wandelt, und eine Ansteuerschaltung 12, welche das Regelelement T in Abhängigkeit von einem Rückkopplungssignal V_{FB} ansteuert, um das Ausgangssignal Vₒᵤₜ mit dem vorgegebenen Wert zur erzeugen. Erfindungsgemäß ist eine Konfigurationsschaltung 14 vorgesehen, welche mindestens ein Konfigurationssignal CF empfängt und auswertet und in Abhängigkeit von der Auswertung das Regelelement T deaktiviert bzw. abschaltet.

Wie aus der einzigen Figur weiter ersichtlich ist, erzeugt ein integrierter Spannungsteiler 18 mit zwei Widerständen R1, R2, R21, welche ein vorgegebenes Teilerverhältnis R1/R2 aufweisen, das Rückkopplungssignal V_{FB} aus dem Ausgangssignal Vₒᵤₜ.

Wie aus der einzigen Figur weiter ersichtlich ist, ist der integrierte Regler 10 im dargestellten Ausführungsbeispiel als ASIC-Baustein (ASIC: Anwendungsspezifische Integrierte Schaltung) ausgeführt und Teil einer Regleranordnung 3 in einem Steuergerät 1 für Personenschutzmittel. Im dargestellten Ausführungsbeispiel umfasst der integrierte Regler 10 einen Konfigurationspin K1, einen Eingangspin, an welchem das Eingangssignal Vᵢₙ anliegt und einen Ausgabepin zur Ausgabe des Ausgangssignals Vₒᵤₜ, wobei am Ausgabepin eine externe Beschaltung 5 vorgesehen ist, welche im dargestellten Ausführungsbeispiel eine Kapazität C umfasst. Zusätzlich oder alternativ kann die externe Beschaltung 5 auch noch andere bzw. weitere externe Bauteile, wie z.B. Induktivitäten, ohmsche Widerständen oder Dioden aufweisen. Alternativ kann der erfindungsgemäße Regler 10 aber auch in einen System-ASIC-Baustein (ASIC: Anwendungsspezifische Integrierte Schaltung) eines Steuergeräts 1 des Personenschutzsystems integriert werden.

Der als Spannungsregler implementierte erfindungsgemäße Regler 10 bietet die Möglichkeit, das Regelelement T zu deaktivieren bzw. abzuschalten oder das Regelelement T aktiviert bzw. arbeitsfähig zu lassen. Die Auswahl der gewünschten Konfiguration erfolgt über den Konfigurationspin K1. Der Status des Konfigurationspins K1 ist entweder ein logischer Low-Pegel (L), welcher durch einen externen Kurzschluss des Konfigurationspins K1 nach Masse realisiert wird, oder ein logischer High-Pegel (H), welcher durch einen offenen Konfigurationspins K1 realisiert wird. Im dargestellten Ausführungsbeispiel bringt eine innerhalb des integrierten Reglers 10 angeordnete Pullup-Schaltung 11 einen offengelassenen Konfigurationspin K1 auf den logischen High-Pegel (H). Die Pullup-Schaltung 11 umfasst einen Pullup-Widerstand Rₚᵤ, welcher mit einem Anschluss mit dem entsprechenden Konfigurationspin K1 und mit dem anderen Anschluss mit einer Pullup-Spannung Vₚᵤ verbunden ist, deren Pegel ungefähr dem logischen High-Pegel (H) entspricht. Der Pegel des Konfigurationspins K1 wird als Konfigurationssignal CF von der Konfigurationsschaltung 14 zurückgelesen und ausgewertet. Die Erkennung des Status erfolgt dabei beispielsweise mit einem Spannungskomparator 14.1, welcher das Konfigurationssignal CF mit einer Referenzspannung V_{ref} vergleicht. Im dargestellten Ausführungsbeispiel wird der logische Low-Pegel (L) verwendet, um das Regelelement T zu deaktivieren bzw. abzuschalten und der logische High-Pegel (H) wird verwendet, um das Regelelement T aktiviert bzw. arbeitsfähig zu lassen.

Der erkannte logische Low-Pegel (L) wird benutzt, um den Regeltransistor T im Falle einer Deaktivierung permanent zu sperren bzw. zu deaktivieren. Dies wird im dargestellten Ausführungsbeispiel durch ein in der Konfigurationsschaltung 14 angeordnetes Schaltelement T_{off} erreicht, das vorzugsweise als Feldeffekttransistor ausgeführt ist und vom Komparator 14.1 über einen Invertierer 14.2 angesteuert wird. Das Schaltelement T_{off} schaltet den Steuereingang des vorzugsweise als Feldeffekttransistor ausgeführten Regelelements T nach Masse kurz, so dass das Regelelement T dauerhaft deaktiviert ist. Dadurch kann auf die externe Beschaltung 5 verzichtet werden, welche im Betrieb zur Stabilisierung und Funktion des integrierten Reglers 10 erforderlich sind. Bei dem dargestellten Linearregler 10 ist nur ein Kapazität C als externe Beschaltung 5 erforderlich. Bei alternativen nicht dargestellten Ausführungsbeispielen, wie einem DC/DC-Schaltwandler, können zusätzlich oder alternativ auch Induktivitäten, ohmsche Widerstände und Dioden erforderlich sein. Die erkannte aktuelle Konfiguration des integrierten Reglers 10 kann in geeigneten Speichermitteln 16 abgelegt werden, welche im dargestellten Ausführungsbeispiel im Regler 10 integriert ist. Alternativ können die Speichermittel 16 auch außerhalb des Reglers 10 im Steuergerät 1 angeordnet werden.

Im Steuergerät 1 erfolgt die Abschaltung der Überwachung des Ausgangssignals Vₒᵤₜ eines deaktivierten Reglers 10, so dass das Ausgangssignal Vₒᵤₜ des deaktivierten Reglers 10 nicht mehr bei der Erzeugung des Resetsignals berücksichtigt wird. Die gespeicherte Konfiguration kann anschließend durch eine Softwareabfrage ausgelesen werden, wobei erkannte Fehler angezeigt werden können. Die Auswertung des Konfigurationssignals CF am Konfigurationspin K1 und die damit verbundene Aktivierung bzw. Deaktivierung des Regelelements T erfolgt aus Robustheitsgründen zu Beginn der Initialisierungsphase des Systems, sobald die internen Logikschaltungen des erfindungsgemäßen integrierten Reglers 10 ausreichend versorgt sind und bevor das Gesamtsystem durch das Resetsignal freigegeben wird. Nach dem initialen Einlesen des Konfigurationssignals CF am Konfigurationspin K1 wird die erkannte Konfiguration verriegelt, so dass ein weiteres Ändern des Pin-Status keinen Einfluss mehr auf den Regler 10 hat. Somit kann es im Normalbetrieb des Steuergeräts 1 nicht zu einer ungewollten Aktivierung bzw. Deaktivierung des Regelelements T, z.B. unter EMV-Einwirkung, kommen. Des Weiteren wird der erkannte Status der Konfigurationspins in einem vorzugsweise als Register ausgeführten Speichermittel 16 gespeichert. Das Speichermittel 16 kann dann im Betrieb beispielsweise durch eine Softwareabfrage ausgelesen werden. Dadurch kann ein falsch erkannter Status erkannt werden und eine Fehleranzeige erfolgen.

Bei alternativen nicht dargestellten Ausführungsformen des erfindungsgemäßen integrierten Reglers können die Detektionsschwellen an den Konfigurationspins und die Art der Spannungszuführung abweichend zu dem dargestellten Ausführungsbeispiel ausgeführt werden. Das dargestellte Ausführungsbeispiel des erfindungsgemäßen integrierten Reglers nutzt eine integrierte Pullup-Schaltung mit einer internen Pullup-Spannung. Alternativ kann auch eine externe Pullup-Schaltung, d.h. eine außerhalb des integrierten Reglers angeordnete Pullup-Schaltung, und eine entsprechende externe Pullup-Spannung zur Erzeugung des High-Pegels (H) an einem offenen Konfigurationspin verwendet werden. Ebenso sind verschiedene Spannungspegel zur Erkennung verschiedener logischer Zustände möglich, beispielsweise Verbindung zu Masse GND oder zu verschiedenen Spannungspotentialen, wie beispielsweise 5,0V, 3,3V usw. Ähnliches gilt, wenn man zusätzlich zu dem logischen High-Pegel und dem logischen Low-Pegel noch Zwischenpegel mittels zusätzlichen Spannungskomparatoren detektieren kann. Ausführungsformen des erfindungsgemäßen integrierten Reglers können beispielsweise als Linearregler oder DC/DC-Schaltwandler ausgeführt werden.

In einem System-ASIC bzw. im Steuergerät des Personenschutzsystems können beliebig viele Regler abschaltbar ausgeführt werden.

## Patentansprüche

1. Integrierter Regler, insbesondere Spannungsregler für Personenschutzmittel in einem Fahrzeug, mit einem Regelelement (T), welches ein Eingangssignal (Vᵢₙ) in ein Ausgangssignal (Vₒᵤₜ) mit einem vorgegebenen Wert wandelt, und einer Ansteuerschaltung (12), welche das Regelelement (T) ansteuert, um das Ausgangssignal (Vₒᵤₜ) mit dem vorgegebenen Wert zur erzeugen, wobei eine Konfigurationsschaltung (14) mindestens ein Konfigurationssignal (CF) empfängt und auswertet und in Abhängigkeit von der Auswertung das Regelelement (T) deaktiviert **dadurch gekennzeichnet, dass**
die Konfigurationsschaltung (14) den erkannten logischen Zustand des mindestens einen Konfigurationssignals (CF) verriegelt und in einem Statusspeicher (16) ablegt.

2. Integrierter Regler nach Anspruch 1, **dadurch gekennzeichnet, dass** das mindestens eine Konfigurationssignal (CF) mittels einer Pin-Konfiguration erzeugbar ist, wobei zur Erzeugung eines ersten logischen Signalpegels (L) für das mindestens eine Konfigurationssignal (CF) ein korrespondierender Anschlusspin (K1) fest mit Masse verbunden ist, und wobei zur Erzeugung eines zweiten logischen Signalpegels (H) für das mindestens eine Konfigurationssignal (CF) ein korrespondierender Anschlusspin (K1) offen gelassen ist.

3. Integrierter Regler nach Anspruch 2, **dadurch gekennzeichnet, dass** eine innerhalb oder außerhalb des integrierten Reglers (10) angeordnete Pullup-Schaltung (11) einen offengelassenen Anschlusspin (K1) auf den zweiten logischen Signalpegel (H) bringt.

4. Integrierter Regler nach einem der Ansprüche 1 bis 3, **dadurch gekennzeichnet, dass** die Konfigurationsschaltung (14) zur Bewertung des mindestens einen Konfigurationssignals (CF) einen Komparator (14.1) umfasst, welcher das mindestens eine Konfigurationssignal (CF) mit einer Referenzspannung (V_{ref}) vergleicht.

5. Integrierter Regler nach Anspruch 4, **dadurch gekennzeichnet, dass** der Komparator (14.1) in Abhängigkeit des Vergleichs ein Schaltelement, vorzugsweise einen Schalttransistor (T_{off}), ansteuert, um das Regelelement (T) zu deaktivieren.

6. Integrierter Regler nach einem der Ansprüche 1 bis 5, **dadurch gekennzeichnet, dass** die Konfigurationsschaltung (14) die Auswertung des mindestens einen Konfigurationssignals (CF) während einer Systeminitialisierung durchführt.

7. Integrierter Regler nach einem der Ansprüche 1 bis 6, **dadurch gekennzeichnet, dass** die Ansteuerschaltung (12) das Regelelement (T) in Abhängigkeit von einem Rückkopplungssignal (V_{FB}) ansteuert, um das Ausgangssignal (Vₒᵤₜ) mit dem vorgegebenen Wert zur erzeugen.

8. Integrierter Regler nach Anspruch 7, **dadurch gekennzeichnet, dass** mindestens ein integrierter Spannungsteiler (18) mit einem vorgegebenen Teilerverhältnis (R1/R2) das Rückkopplungssignal (V_{FB}) aus dem Ausgangssignal (Vₒᵤₜ) erzeugt.

9. Steuergerät zur Ansteuerung von Personenschutzmitteln in einem Fahrzeug mit einer Regleranordnung (3), welche mindestens eine Spannung im Steuergerät (1) regelt, **dadurch gekennzeichnet, dass** die Regleranordnung (3) mindestens einen integrierten Regler (10) nach einem der Ansprüche 1 bis 8 aufweist.

## Claims

1. Integrated regulator, in particular voltage regulator for personal protection means in a vehicle, having a regulating element (T) which converts an input signal (Vin) into an output signal (Vₒᵤₜ) with a predefined value, and an actuation circuit (12) which actuates the regulating element (T) to generate the output signal (Vₒᵤₜ) with the predefined value, a configuration circuit (14) receiving and evaluating at least one configuration signal (CF) and deactivating the regulating element (T) on the basis of the evaluation,
**characterized in that**
the configuration circuit (14) locks the detected logical state of the at least one configuration signal (CF) and stores it in a status memory (16).

2. Integrated regulator according to Claim 1, **characterized in that** the at least one configuration signal (CF) can be generated by means of a pin configuration, a corresponding connection pin (K1) being permanently connected to earth in order to generate a first logical signal level (L) for the at least one configuration signal (CF), and a corresponding connection pin (K1) being left open in order to generate a second logical signal level (H) for the at least one configuration signal (CF).

3. Integrated regulator according to Claim 2, **characterized in that** a pull-up circuit (11) arranged inside or outside the integrated regulator (10) changes a connection pin (K1) which has been left open to the second logical signal level (H).

4. Integrated regulator according to one of Claims 1 to 3, **characterized in that**, in order to assess the at least one configuration signal (CF), the configuration circuit (14) comprises a comparator (14.1) which compares the at least one configuration signal (CF) with a reference voltage (V_{ref}).

5. Integrated regulator according to Claim 4, **characterized in that**, on the basis of the comparison, the comparator (14.1) actuates a switching element, preferably a switching transistor (T_{off}), to deactivate the regulating element (T).

6. Integrated regulator according to one of Claims 1 to 5, **characterized in that** the configuration circuit (14) evaluates the at least one configuration signal (CF) during system initialization.

7. Integrated regulator according to one of Claims 1 to 6, **characterized in that** the actuation circuit (12) actuates the regulating element (T) on the basis of a feedback signal (V_{FB}) to generate the output signal (Vₒᵤₜ) with the predefined value.

8. Integrated regulator according to Claim 7, **characterized in that** at least one integrated voltage divider (18) generates the feedback signal (V_{FB}) from the output signal (Vₒᵤₜ) using a predefined divider ratio (R1/R2).

9. Control device for actuating personal protection means in a vehicle, having a regulator arrangement (3) which regulates at least one voltage in the control device (1), **characterized in that** the regulator arrangement (3) has at least one integrated regulator (10) according to one of Claims 1 to 8.

## Revendications

1. Régulateur intégré, notamment régulateur de tension pour moyens de protection de personnes dans un véhicule, comprenant un élément régulateur (T) qui convertit un signal d'entrée (Vin) en un signal de sortie (Vₒᵤₜ) ayant une valeur prédéfinie, et un circuit de commande (12) qui commande l'élément régulateur (T) en vue de générer le signal de sortie (Vₒᵤₜ) ayant la valeur prédéfinie, un circuit de configuration (14) recevant et interprétant au moins un signal de configuration (CF) et désactivant l'élément régulateur (T) en fonction de l'interprétation,
**caractérisé en ce que**
le circuit de configuration (14) verrouille l'état logique reconnu de l'au moins un signal de configuration (CF) et l'enregistre dans une mémoire d'état (16).

2. Régulateur intégré selon la revendication 1, **caractérisé en ce que** l'au moins un signal de configuration (CF) peut être généré au moyen d'une configuration de broche, une broche de raccordement (K1) correspondante étant reliée de manière permanente à la masse en vue de générer un premier niveau de signal logique (L) pour l'au moins un signal de configuration (CF), et une broche de raccordement (K1) correspondante étant laissée ouverte en vue de générer un deuxième niveau de signal logique (H) pour l'au moins un signal de configuration (CF).

3. Régulateur intégré selon la revendication 2, **caractérisé en ce qu'**un circuit tirage au niveau haut (11) disposé à l'intérieur ou à l'extérieur du régulateur intégré (10) amène une broche de raccordement (K1) laissée ouverte au deuxième niveau de signal logique (H).

4. Régulateur intégré selon l'une des revendications 1 à 3, **caractérisé en ce que** pour évaluer l'au moins un signal de configuration (CF), le circuit de configuration (14) comprend un comparateur (14.1) qui compare l'au moins un signal de configuration (CF) avec une tension de référence (V_{ref}).

5. Régulateur intégré selon la revendication 4, **caractérisé en ce que** le comparateur (14.1), en fonction de la comparaison, commande un élément de commutation, de préférence un transistor de commutation (T_{off}), afin de désactiver l'élément régulateur (T).

6. Régulateur intégré selon l'une des revendications 1 à 5, **caractérisé en ce que** le circuit de configuration (14) effectue l'interprétation de l'au moins un signal de configuration (CF) pendant une initialisation du système.

7. Régulateur intégré selon l'une des revendications 1 à 6, **caractérisé en ce que** le circuit de commande (12) commande l'élément régulateur (T) en fonction d'un signal de rétroaction (V_{FB}) en vue de générer le signal de sortie (Vₒᵤₜ) ayant la valeur prédéfinie.

8. Régulateur intégré selon la revendication 7, **caractérisé en ce qu'**au moins un diviseur de tension intégré (18) ayant un rapport de division (R1/R2) prédéfini génère le signal de rétroaction (V_{FB}) à partir du signal de sortie (Vₒᵤₜ).

9. Contrôleur destiné à commander des moyens de protection de personnes dans un véhicule, comprenant un arrangement régulateur (3) qui régule au moins une tension dans le régulateur (1), **caractérisé en ce que** l'arrangement régulateur (3) possède au moins un régulateur intégré (10) selon l'une des revendications 1 à 8.
